# EUROPEAN PATENT APPLICATION

(11) **EP 4 524 665 A1**
(43) Date of publication of application: **19.03.2025**
(21) Application number: 23196817.3
(22) Date of filing: 12.09.2023
(51) Int. Cl.: G05B 19/418

(54) **METHOD TO PREPARE A PROGRAMMABLE NETWORK, METHOD TO OPERATE A PROGRAMMABLE NETWORK, SYSTEM AND TASK-TO-NETWORK SYNTHESIS MODULE**

(71) Applicant: Siemens Aktiengesellschaft, 80333 München (DE)
(72) Inventor: Blenk, Andreas, 86916 Kaufering (DE); Varastehhajipour, Amir, 81379 München (DE)
(74) Representative: Siemens Patent Attorneys

(57) **Abstract**

The invention is related to Method to prepare a programmable network (5), comprising steps of: training of a task embedding and network configuration (4) model by the artificial intelligence module (11) using the scenario, the task embedding problem and the simulation data; transmission of task-to-configuration map (17) update request message from the artificial intelligence module (11) to a task-to-configuration map (17) module (16) of the task-to-network operation synthesis module; updating a task-to-configuration map (17) of the task-to-network operation synthesis module by the artificial intelligence module (11), the task-to-configuration map (17) mapping respective tasks to respective network configurations (4); and transmission of a task-to-configuration map (17) update response message from the task-to-configuration map (17) module (16) to the artificial intelligence module (11).

## Description

The present invention relates to a method to prepare a programmable network, a method to operate a programmable network, a system and a task-to-network synthesis module.

Today's industrial networks of factories are configured manually. Moreover, the networks are configured and operated in a static manner. Traditionally, the production task, e.g., the assembly of objects, did not change frequently or quite fast. This, however, is changing with customers being able to request custom objects nowadays. Moreover, it is expected that products will be manufactured more on demand than before. This can improve sustainability as resources are only used and configured when needed. Overall, this vision of more flexible and demand-oriented operation of factories needs new concepts for operating networks in factories. Having static network configurations and control introduces too much overhead and, further, leads to a waste of resources. In addition, the concept of programmable networks was introduced within the last years. With this concept, network operators can now fully program networking equipment according to their demands. This, however, introduces additional overhead: the network operator does not only have to provide network configurations and control rules which are put into effect by, e.g., a software defined networking, SDN, controller, but also additional network code that can operate on the programmable network platforms. While the programmable networks help to render networks more efficiently, it adds an additional operation step next to providing configurations and control rules.

Future networking concepts need to be flexible and highly dynamic. In this case, putting the human into the loop of network operation and control is too slow. Moreover, to not waste resources, networks should always change according to the high-level task, e.g., producing individual customer products. So far, no method exists yet that enables the network to become context-aware, i.e., enable the network to recognize the production task at hand. According to the state of the art, a human OT operator and a human IT operator are needed to realize a network that serves a task. So far, human operators are involved in both the creation and planning of the tasks and the planning and control of the network according to the task. They need to instruct a robot arm to assemble assets and configure the network that is connecting such robot arm, e.g., with other physical objects. To further reduce human effort, an automated data-driven network configuration and control loop needs to be enabled.

It is an objective of the present invention to reduce a human effort for preparing a programmable network.

According to the present invention, this object is solved by a method to prepare a programmable network, a method to operate a programmable network, and a system and a task-to-network synthesis module according to the independent claims. Further favourable developments are defined in the sub claims.

This invention proposes to use a task-intent-based network planning, provisioning, and control approach. For the network infrastructure, the invention proposes to automate the task of network program, network configuration, and network rule creation. With this, the network management and operation system become aware of the production task. To realize such a system, the modules use task-intents given by OEM operators or OT operators in the planning phase. In the operation phase, the modules proposed in this invention use real-task-data, e.g., pictures taken with a video camera, or they use data from digital twins representing the real-tasks and objects to create task intents automatically without any human intervention. Production tasks, e.g., images of goods which should be produced, are translated automatically into network intents, which are then put into valid network programs, configurations, and control settings. Additionally, with the introduction of the digital twin concept, we envision that this operation can happen in the physical world, but also in a pure digital world, or a combination of both physical and digital worlds. In this way, this invention enables planning networks beforehand of deploying the network. Accordingly, the human network operator is not needed anymore to plan the whole network. A human operator can just focus on the production task, the planning and provisioning of the network is considered over by the modules of this invention.

A first aspect of the invention is related to a method to operate a planning procedure for a programmable network.

The method comprises a step of a reception of a planning procedure initialisation request message by a digital twin module of a task-to-network operation synthesis module. The digital twin module is configured to operate a digital network twin representing the programmable network. The digital network twin may comprise a digital representation of the programmable network and replicate the network topology and the individual network devices.

The method comprises a step of a transmission of a task embedding solution request message from the digital twin module to a task-embedding-solver module of the task-to-network operation synthesis module. The task embedding solution request message comprises a task embedding problem to be solved for the programmable network represented by the digital twin.

The task embedding problem may comprise a request to investigate a network configuration for the programmable network, which configures the programmable network to solve a given task. The task may comprise a provision of a flow of a given quality of service between two given industry devices connected to the programmable network. The requested network configuration may comprise configurations of respective network devices of the programmable network, necessary to provide the flow.

In other words, the digital twin module sends the task embedding solution request message to the task-embedding-solver module to request a solution for the embedding of the task in the programmable network. The task embedding solution request message is received by the task-embedding-solver module of the task-to-network operation synthesis module. The task-embedding-solver module may investigate the task embedding solution comprising a configuration file to embed the task in the programmable network. The task-embedding-solver module investigates the task embedding solution solving the task embedding problem for the programmable network.

A next step comprises a transmission of a task embedding solution response message from the task-embedding-solver module to the digital twin module, the task embedding solution response message comprising the task embedding solution. In other words the task embedding solution is sent to the digital twin module by the task-embedding-solver module. The digital twin module receives the task embedding solution response message that comprises the task embedding solution.

The digital twin module simulates an application of the task embedding solution in the digital network twin representing the programmable network. In other words the digital twin module reconfigures the digital network twin of the programmable network according to the task embedding solution. The digital twin module operates the digital network twin and collects simulation data during the simulation of the operation of the programmable network according to the task embedding solution in the digital network twin.

A next step comprises a transmission of a simulation data provision message from the digital twin module to an artificial intelligence module of the task-to-network operation synthesis module. The simulation data provision message comprises a representation of the programmable network, the task embedding problem, the task embedding solution, comprising the network configuration, and the simulation data. In other words the digital network twin module sends the simulation data provision message to the artificial intelligence module. The simulation data provision message comprises the simulation data, collected during the simulation of the programmable network in the digital network twin, and the task embedding problem. The artificial intelligence module receives the simulation data provision message.

In a next step the artificial intelligence module trains the task embedding network configuration module using the scenarios task embedding problem instance simulation data. In other words the artificial intelligence module trains the task embedding network configuration module. The task embedding network configuration module may be a modern for solving task embedding problems for programmable networks. The artificial intelligence module of the task-to-network operation synthesis module bundle the test embedding the network configuration module may be artificial 9 network. During the training of the past embedding in that the configuration module the artificial intelligence module provides the scenario the task embedding problem for the scenario and the simulation data gathered for the scenario applying the task embedding problem.

A next step comprises a transmission of a task-to-configuration map update request message from the artificial intelligence module to a task-to-configuration map module of the task-to-network operation synthesis module. In other words the artificial intelligence module sends the task-to-configuration map update request message to the task-to-configuration map module wherein the task-to-configuration map update request message comprises a request to update a task-to-configuration map with the scenario the task embedding problem and the simulation data. The task-to-configuration map module updates the task-to-configuration map, wherein the task-to-configuration map assigns respective tasks to respective network configurations. In other words, the network configuration evaluated for the respective task is added to the task-to-configuration map.

A next step comprises a transmission of a task-to-configuration map update response message from the task-to-configuration map module to the artificial intelligence module. The task-to-configuration map update response message signals the update of the task-to-configuration map by the task-to-configuration map module.

According to a further embodiment of the invention, the method comprises a step of, upon receipt of the planning procedure initialisation request message by the digital twin module, transmitting the task-scenario request message from the digital twin module to a task-scenario-generator module of the task to network operation synthesis module. In other words, when the digital twin module receives the planning procedure initialisation request message, the digital twin module sends the task-scenario request message to the task-scenario-generator module. The task-scenario request message contains a request to provide the task to be embedded to the digital twin module.

A next step comprises a transmission of a task-scenario response message from the task-scenario-generator module to the digital twin module. The task-scenario response message comprises the scenario and the task embedding problem to be solved for the scenario.

In other words, the task-scenario-generator module provides the scenario and the respective task embedding problem to the digital twin module via the task-scenario response message.

In a next step the digital twin module receives the task-scenario response message from the task-scenario-generator module and sets up a digital network twin, representing the scenario of the programmable network described in the task-scenario response message. In other words to train the task embedding network configuration module it is necessary to provide task embedding solutions to solve respective tasks for respective scenarios. These task may be provided by task-scenario-generator module.

According to a further embodiment of the invention upon reception of the task-scenario request message by the task-scenario-generator module, the task-scenario-generator module generates the scenario of the programmable network and the task embedding problem to be solved for this scenario. In other words the task-scenario-generator module generates a scenario of the programmable network. The scenario may describe a topology of the programmable network, available resources of the programmable network, and a load of the programmable network. The task-scenario-generator module also generates the task to be solved for the provided scenario. The task may comprise a provision of flows or resource of the network. A network configuration to solve the task by the programmable network may have to be found by the task-embedding-solver module.

According to a further embodiment of the invention upon reception of the task-scenario request message by the task-scenario-generator module the task-scenario-generator module sends a synthetic task-scenario request message to the network operator module. In other words when the task-scenario request message is received by the task-scenario-generator module, the task-scenario-generator module sends a synthetic task-scenario request message to the network operator module. The synthetic task-scenario request message may ask for a provision of the task-scenario by the network operator module. In other words the task-scenario-generator module may ask whether the task-scenario is provided to the network operator module.

A next step comprises a transmission of the synthetic task-scenario response measured from the network operator module to the task-scenario-generator module comprising the scenario the task embedding problem. In other words if the scenario and the task embedding problem is present in the network operator module, the network operator module sends the scenario task embedding problem to the task-scenario-generator module in the synthetic task-scenario response message.

According to a further embodiment of the invention the method comprises a reception of a planning phase initialisation request message by a network management system module. The planning phase initialisation request message may be provided by the operator. A next step comprises a transmission of a network discovery request message from the network management system module to a network controller module of a programmable network. In other words when the planning phase initialisation request message is received by the network management system module, the network management system module sends the network discovery request message to the network controller module of the programmable network. The network discovery request message comprises a request for the network controller module to collect network discovery data describing the programmable network.

Upon reception of the network discovery request message by the network controller module, the network controller module collects the network discovery data describing the programmable network. The network discovery data may describe available resource, network devices, and a load of the network and a topology of the network.

A next step comprises a transmission of a network discovery response comprising the network discovery data from the network controller module to the network management system module. In other words the network controller module sends the network discovery response message to the management system module and the network management system module receives the network discovery response.

A next step comprises a transmission of a network discovery data message from the network management system module to the digital twin module. In other words, the network discovery data received by the network management system module are sent by the network management system module to the digital twin module via the network discovery data message. The transmission of the network discovery data to the digital twin module is performed to provide the network discovery data to the digital twin module. The network discovery data allow a generation of the digital twin representing the programmable network according to the network discovery data. The generation of the digital twin representing the programmable network allows a generation of the task solutions for the programmable network using the digital twin representing the pro-gram of the network.

According to a further embodiment of the invention the method comprises a step of a reception of the task-to-configuration update response message by the artificial intelligence module. Upon receipt of the configured update response message by the artificial intelligence module a transmission of a scenario request message from the artificial intelligence module to the digital twin module is performed. In other words when the task-to-configuration update response message is received by the artificial intelligence module, the artificial intelligence module is informed about the update of the task-to-configuration map and sends the scenario request message to the digital twin module to request the provision of a next scenario request.

According to a further embodiment of the invention the steps of the method are repeated until a predefined condition is fulfilled by the task embedding and network configuration model. In other words the scenario sensor tasks to be solved for scenarios are provided in the loo until the predefined condition is fulfilled.

According to a second aspect of the invention a method to operate a programmable network is provided.

The method comprises the reception of real-time production data from a production module by a task-translator module of a task-to-network operation synthesis module. In other words in the operation of the programmable network the task-translator module of the task-to-network operation synthesis module is set up to receive the real time production data from the production module. The production module may be designed as a device of an industry infrastructure connected to the programmable network.

In a next step the task-translator module identifies a task embedding problem to be solved for the programmable network as a function of the real-time production data. In other words, the task-translator module may translate a content of the real-time production data to the task embedding problem. The production data may for example comprise an image of a product to be produced by the production module, recorded by a camera of the production module. The task-translator module may be configured to identify the product shown in the image of the real time production data. The task-translator module may identify the task to be embedded in the programmable network. As an example the task-translator module may identify the bottle to be produced by the production module. The task embedding problem to be solved may be a provision of respective flows and resource by the programmable network to allow the production of the identified bottle by the production module.

A next step comprises a transmission of a task message from the task-translator module to a network management system module. The task message comprises the task embedding problem to be solved for the programmable network. A next step comprises a transmission of the task embedding problem from the network management system module to the task-to-network operation synthesis module. In other words the network management system module sends the task embedding problem to the task-to-network operation synthesis module to request a network configuration, solving the task embedding problem.

A next step comprises a transmission of the network configuration solving the task embedding problem from the task-to-network operation synthesis module to the network management system module. In other words the task-to-network operation synthesis module provides the network configuration, necessary for the programmable network to solve the task embedding problem to the network management system module.

A next step comprises a transmission of a configure network request message comprising the network configuration from the network management system module to the network controller module.

In a next step the network controller module configures the programmable network according to the network configuration. Upon configuration of the programmable network a transmission of a configure network response message from the network controller module to the network management system module is performed.

According to a further embodiment of the invention the method comprises a transmission of the task-to-configuration request message from the network management system module to a task-to-configuration module of the task-to-network operation synthesis module. The task-to-configuration request message comprises the incoming task, identified by the task-translator module. A next step comprises a looking up of the network configuration for the incoming task by the task-to-configuration module in the task-to-configuration map. In other words the task-to-configuration module evaluates whether the network configuration for the incoming task is present in the task-to-configuration map.

A next step comprises a transmission of the task-to-configuration response from the task-to-configuration module to the network management system module. The task-to-configuration message comprises the network configuration for the incoming task. In other words if the configuration is found in the task-to-configuration map the respective network configuration is provided to the network management system module by the task to configuration module in the task-to-configuration response message. The embodiment has the advantage that a pre-existing network configuration may be provided as a solution of the task embedding problem. Therefore it is possible to avoid a time and resource to find the network configuration.

According to a further embodiment of the invention the method comprises a step of transmission of the incoming task message from the network management system module to a digital twin module of the task-to-network operation synthesis module. In other words the incoming task is provided to the digital twin module.

The digital network twin may comprise a digital representation of the programmable network and replicate the network topology and the individual network devices.

The method comprises a step of a transmission of a task embedding solution request message from the digital twin module to a task-embedding-solver module of the task-to-network operation synthesis module. The task embedding solution request message comprises a task embedding problem to be solved for the programmable network represented by the digital twin.

The task embedding problem may comprise a request to investigate a network configuration for the programmable network, which configures the programmable network to solve a given task. The task may comprise a provision of a flow of a given quality of service between two given industry devices connected to the programmable network. The requested network configuration may comprise configurations of respective network devices of the programmable network, necessary to provide the flow.

In other words, the digital twin module sends the task embedding solution request message to the task-embedding-solver module to request a solution for the embedding of the task in the programmable network. The task embedding solution request message is received by the task-embedding-solver module of the task-to-network operation synthesis module. The task-embedding-solver module may investigate the task embedding solution comprising a configuration file to embed the task in the programmable network. The task-embedding-solver module investigates the task embedding solution solving the task embedding problem for the programmable network.

A next step comprises a transmission of a task embedding solution response message from the task-embedding-solver module to the digital twin module, the task embedding solution response message comprising the task embedding solution. In other words the task embedding solution is sent to the digital twin module by the task-embedding-solver module. The digital twin module receives the task embedding solution response message that comprises the task embedding solution.

The digital twin module simulates an application of the task embedding solution in the digital network twin representing the programmable network. In other words the digital twin module reconfigures the digital network twin of the programmable network according to the task embedding solution. The digital twin module operates the digital network twin and collects simulation data during the simulation of the operation of the programmable network according to the task embedding solution in the digital network twin.

A next step comprises a transmission of a simulation data provision message from the digital twin module to an artificial intelligence module of the task-to-network operation synthesis module. The simulation data provision message comprises a representation of the programmable network, the task embedding problem, the task embedding solution, comprising the network configuration, and the simulation data. In other words the digital network twin module sends the simulation data provision message to the artificial intelligence module. The simulation data provision message comprises the simulation data, collected during the simulation of the programmable network in the digital network twin, and the task embedding problem. The artificial intelligence module receives the simulation data provision message.

In a next step the artificial intelligence module trains the task embedding network configuration module using the scenarios task embedding problem instance simulation data. In other words the artificial intelligence module trains the task embedding network configuration module. The task embedding network configuration module may be a modern for solving task embedding problems for programmable networks. The artificial intelligence module of the task-to-network operation synthesis module bundle the test embedding the network configuration module may be artificial 9 network. During the training of the past embedding in that the configuration module the artificial intelligence module provides the scenario the task embedding problem for the scenario and the simulation data gathered for the scenario applying the task embedding problem.

A next step comprises a transmission of a task-to-configuration map update request message from the artificial intelligence module to a task-to-configuration map module of the task-to-network operation synthesis module. In other words the artificial intelligence module sends the task-to-configuration map update request message to the task-to-configuration map module wherein the task-to-configuration map update request message comprises a request to update a task-to-configuration map with the scenario the task embedding problem and the simulation data. The task-to-configuration map module updates the task-to-configuration map, wherein the task-to-configuration map assigns respective tasks to respective network configurations. In other words, the network configuration evaluated for the respective task is added to the task-to-configuration map.

A next step comprises a transmission of a task-to-configuration map update response message from the task-to-configuration map module to the artificial intelligence module. The task-to-configuration map update response message signals the update of the task-to-configuration map by the task-to-configuration map module.

A next step comprises the transmission of the respective network configuration from the task-to-configuration map module to the network management system module. The network management system module may send a network configuration response message to the task-to-configuration map module to confirm receipt of the network configuration.

The embodiment has the advantage that the network configuration may be generated by the artificial intelligence module on purpose if no network configuration is present in the task-to-configuration map.

According to a further embodiment of the invention, the method comprises a step of updating an interface module of the network management system module by the network management system module upon reception of the configured network response message by the network management system module. The interface may for example show a current state of the programmable network and may be configured to allow a configuration of the programmable network. The update of the interface module may comprise an activation or a deactivation of a reception behaviour of the interface module with respect to a reception of control input for the programmable network. In other words, after the update, the interface module may be configured to accept the control input for the programmable network, if a respective function was updated by the new network configuration.

According to a further embodiment of the invention the method comprises a step of a transmission of a task quality request message from the network management system module to the production module upon reception of the configure network response message by the network management system module. The task quality request message may comprise a request to provide task quality data to the network management system module. The task quality data may include log files collected while operating the production module using the programmable network configured according to the network configuration. The task quality data may allow an analysis of an efficiency or reliability of the operation of the production module, when the programmable network is configured according to the network configuration.

A next step comprises a transmission of a task quality response message from the production device to the digital twin module upon receipt of the task quality request message by the production module. The task quality response message comprises the task quality data. The digital twin module may use the task quality data to replicate the operation of the production module in the digital twin.

A next step comprises a transmission of a task quality feedback message from the digital twin module to the artificial intelligence module upon receipt of the task quality response message by the digital twin module. The digital twin module may replicate the operation of the production module in the digital twin and evaluate a task quality feedback of the operation of the industrial module itself and/or the operation of the industrial module together with the programmable network according to the network configuration.

A next step comprises an update of the task embedding and network configuration model by the artificial intelligence module as a function of the task quality feedback. In other words, the artificial intelligence module uses the task quality feedback to improve the task embedding and network configuration model.

According to a further embodiment of the invention the method comprises a step of transmission of an operation phase start request message from an operator to the network management system module.

A next step comprises a transmission of an operation phase request message from the network management system module to the network controller module upon receipt of the operation phase start request message by the network management system module.

A next step comprises a transmission of an operation phase response message from the network controller module to the network management system module upon receipt of the operation phase request message by the network controller module.

A next step comprises a transmission of an operation phase start response message from the network management system module to the operator upon receipt of the operation phase response message by the network management system module.

A third aspect of the invention is related to a system comprising a task-to-network operation synthesis module, a network controller module, a network management system module and a production device. The system may be configured to perform a method according to the first aspect of the invention and/or to perform a method according to the second aspect of the invention.

A fourth aspect of the invention is related to a task-to-network operation synthesis module. The task-to-network operation synthesis module may be designed as the task-to-network operation synthesis module of the system according to the third aspect of the invention. The task-to-network operation synthesis module may be configured to perform the steps of the method according to the first aspect of the invention and/or to perform a method according to the second aspect of the invention related to the task-to-network operation synthesis module.

For use cases or use situations which may arise during the methods and which are not explicitly described here, it may be provided that, in accordance with the methods, an error message and/or a request for user feedback is issued and/or a default setting and/or a predetermined initial state is set.

Independent of the grammatical term usage, individuals with male, female or other gender identities are included within the term.

The present invention will now be described in more detail along with the figures showing in:
- FIG 1: a schematic illustration of a method to prepare a programmable network according to state-of-the-art.
- FIG 2: a schematic illustration of a system comprising a programmable network according to the state of the art.
- FIG 3: a schematic illustration of a data sequence diagram for a method to operate a programmable network according to the state-of-the-art.
- FIG 4: a schematic illustration of a system comprising a programmable network.
- FIG 5: a schematic illustration of a data sequence diagram for a method to prepare a programmable network.
- FIG 6: shows a schematic illustration of a sequence diagram of an online operation phase.

The following examples represent preferred embodiments of the present invention.

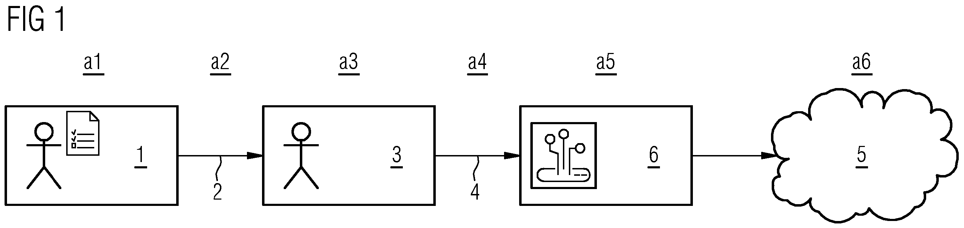

FIG 1 shows a schematic illustration of a method to prepare a programmable network 5 according to state-of-the-art.

In a first step a1 an OT operator 1 configures an operational technology.

In a next step a2 the OT operator 1 provides network requirements 2 to a network operator 3 operating a programmable network 5. The network operator 3 may be responsible for a provision of a network configuration 4 to operate the programmable network 5 according to the network requirements 2. The network requirements 2 may define requested flows and requested resource to be provided by the programmable network 5 connected to the operation technology to perform the task.

In a step a3 the network operator 3 may generate the network configuration 4 to configure the programmable network 5.

In a step a4 the network operator 3 may provide the network configuration 4 to a network management system module 6.

In a step a5 the network management system module 6 may control the programmable network 5 according to the network configuration 4.

In a step a6 the programmable network 5 may operate according to the network configuration 4.

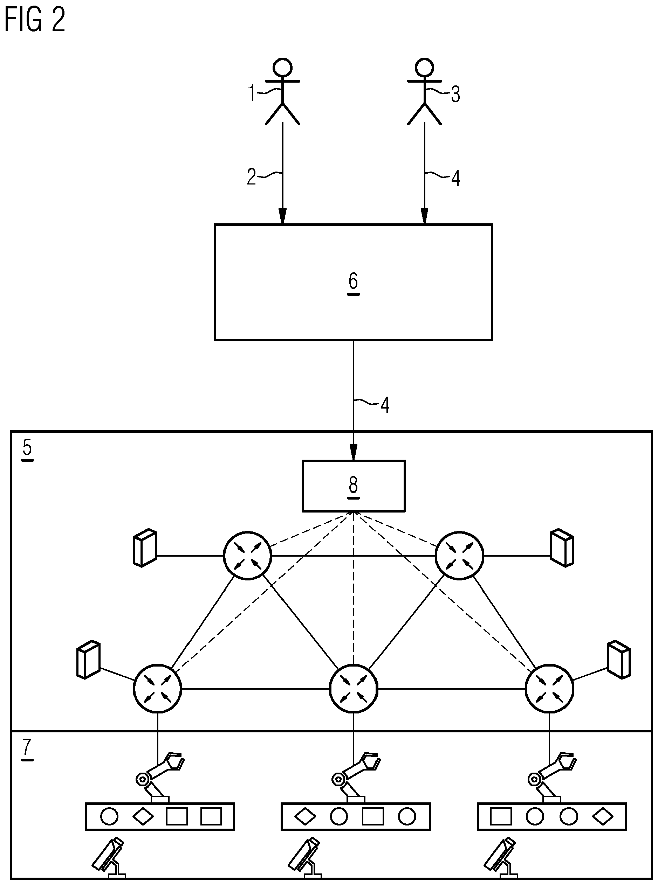

FIG 2 shows a schematic illustration of a system comprising a programmable network 5 according to the state of the art.

The figure illustrates a targeted scenario of this disclosure. In the following, different scenarios where the state of the art introduces overhead in the targeted scenario are described. To prepare a programmable network 5 according to the state of the art, human OT operator 1 and network operator 3 need to interact. Traditionally, the OT operator 1 is planning the operation of the manufacturing machines. Afterwards, the OT operator 1 gives the task to the human network operator 3 who should operate and plan the programmable network 5 accordingly.

In some other cases, an OT operator 1 might even take over the network operator 3 task without having a deep networking knowledge needed to provision an optimal network. This interaction introduces overhead, which can potentially lead to a waste of resources due the communication problems between both operators 1 and potential misunderstanding.

With the disclosure, only a high-level task is defined. The invention then automatically translates the high-level task into a network intent, which is then translated into network program code, configurations, and rules. Human network operator 3 needs to change network manually. Normally, the input is not taken from videos, but rather network users intrinsically by using applications and/or operators provide the input to the network, e.g., with network intents. In this setup, the network is configured to support the production of product a. In case another product b needs to be produced, the human operator would have to adapt both the production system and the network - a time-costly operation. With this invention, the network can automatically adapt the network to the production of another product. Human network operator 3 needs to design an overprovisioned network. In another setting, two products should be produced over one production line and one network. In this setting, the network would have to be configured and controlled in a way to support the production of both products. This, however, might introduce an overhead in the network as there might exist an optimal network configuration 4 for product a, which is not optimal for b and vice versa; hence, networking resources might be wasted. With this invention, we propose to let the network adapt to the production task, i.e., the network becomes aware of the product to be produced. In this case, the network always adapts to an optimal configuration: in our example an optimal configuration of the network exists for product a, and an optimal configuration exists for product b. With our invention, the network can switch between both configurations at runtime.

Furthermore, solutions exist that already take high level tasks or data as input to create network programming code, configurations, and control actions. One of the solutions is disclosed in t. Swamy, a. Zulfiqar, l. Nardi, m. Shahbaz, and k. Olukotun, "homunculus: autogenerating efficient data-plane ml pipelines for datacenter networks". However, these concepts do not yet integrate the digital twin concept to create data, nor do they enable a closed optimization loop.

Also, the solutions do not connect the real production system, e.g., via cameras, with the network management and control system. With our invention, a database providing a mapping from production tasks to network intents, including programs, configurations, and control rules, can be created. Such a database can also be used afterwards for new task-scenarios, which partly build up on already existing tasks within the database.

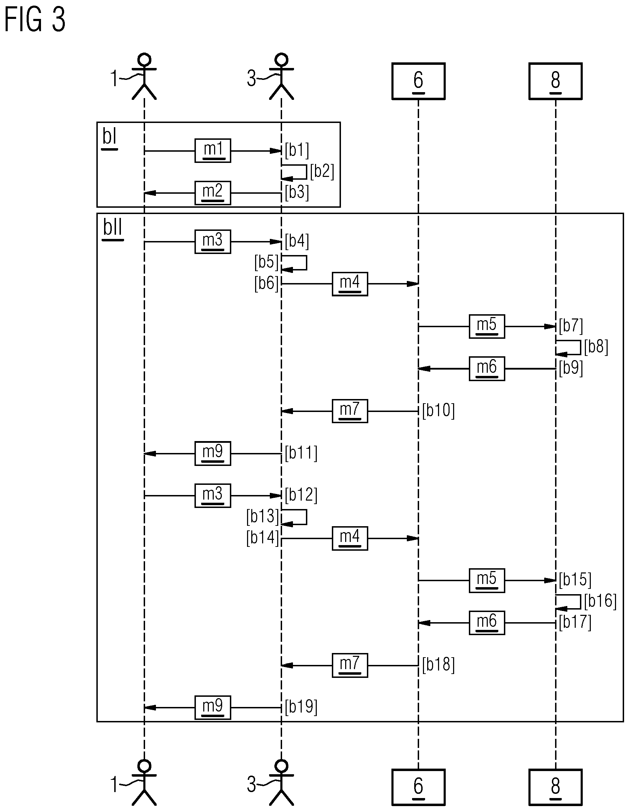

FIG 3 shows a schematic illustration of a data sequence diagram for a method to operate a programmable network 5 according to the state-of-the-art.

A first phase bi of the method, comprising steps b1 to b3 may be a planning phase.

A step b1 may comprise a transmission of a planning phase request message m1 comprising network requirements 2 regarding a programmable network 5 from an OT operator 1 to a network operator 3. Network requirements 2 may comprise demands on the programmable network 5 to perform a task a and to perform a task b by a production device 7 connected to the programmable network 5.

In a step b2 the network operator 3 may prepare a network configuration 4 for the tasks a and b according to the network requirements 2.

A step b3 may comprise a transmission of a planning phase response message m2 from the network operator 3 3 to the OT operator 1. The planning phase response message m2 may signal that a network configuration 4 is prepared by the network operator 3.

A second phase bii of the method, comprising steps b4 to b19 may be an operation phase.

A step b4 may comprise a transmission of a task request message m3, from the OT operator 1 to the network operator 3 3. The task request message m3 may comprise a request to prepare the programmable network 5 for a conduction of task a in the production device 7.

A step b5 may comprise a processing of the request to prepare the programmable network 5 for a conduction of task a by the network operator 3.

A step b6 may comprise a transmission of a task embedding and network configuration request message m4 from the network operator 3 comprising the respective network configuration 4 for task a from the network operator 3 to a network management system module 6.

A step b7 may comprise a transmission of a network configuration request message m5 from the network management system module 6 network management system module 6 to a network controller module 8. The network configuration request message m5 may comprise the network configuration 4 for task a.

A step b8 may comprise a processing and an application of the network configuration 4 by the network controller module 8 to configure the programmable network 5.

A step b9 may comprise a transmission of a network configuration response message m6 from the network controller module 8 to the network management system module 6 network management system module 6. The network configuration 4 response message m6 may signal a successful configuration of the programmable network 5 according to the network configuration 4 by the network controller module 8.

A step b10 may comprise a transmission of a task embedding network configuration response message m7 from the network management system module 6 to the network operator 3.

A step b11 may comprise a transmission of task response message m9from the network operator 3 to the OT operator 1.

A step b12 may comprise a transmission of a task request message m3 from the OT operator 1 to the network operator 3 3. The task request message m3 may comprise a request to prepare the programmable network 5 for a conduction of a not predefined task x in the production device 7 9. In other words, task x is new to the network operator 3 3. Therefore no pre-existing network configuration 4 4 for task x is available.

A step b13 may comprise a processing of the request to prepare the programmable network 5 for a conduction of task a by the network operator 3. Because no network configuration 4 for task x is available, the network configuration 4 for task x has to be generated by the network operator 3. The embedding of the task and/or the generation of the network configuration 4 may take a long time.

A step b14 may comprise a transmission of a task embedding and network configuration 4 request message m4 from the network operator 3 comprising the respective network configuration 4 for task a from the network operator 3 to a network management system module 6 network management system module 6.

A step b15 may comprise a transmission of a network configuration 4 request message from the network management system module 6 network management system module 6 to a network controller module 8. The network configuration 4 request message m5 may comprise the network configuration 4 for task x.

A step b16 may comprise a processing and an application of the network configuration 4 4 by the network controller module 8 to configure the programmable network 5. However the network configuration 4 for task x may be buggy or the network configuration 4 4 may not be as intended.

A step b17 may comprise a transmission of a network configuration 4 response message m6 from the network controller module 8 to the network management system module 6 network management system module 6. The network configuration 4 response message m6 may signal a successful configuration of the programmable network 5 according to the network configuration 4 by the network controller module 8.

A step b18 may comprise a transmission of a task embedding network configuration 4 response message from the network management system module 6 to the network operator 3. However, a task embedding may be inefficient, therefore a network overload and a delay violation may occur.

A step b18 may comprise a transmission of a task response message m9 from the network operator 3 to the OT operator 1.

The task response message m9 may signal, that a serving of task x has failed.

FIG 3 is performed on a system according to the state of the art. The system may comprise the following modules: network operator 3, OT operator 1, network management system module 6, and network controller module 8.

In the planning phase bi, the network operator 3 must be ready to accept incoming tasks from the OT operator 1, so he can configure the network accordingly. However, this task embedding may be very time consuming and not possible due to limited knowledge and inefficiency of the network operator 3. Indeed, defining various situations and task-scenarios, solving them, and writing the network configuration 4 files manually is very difficult, if not impossible for a human.

Therefore, in the method shown in FIG 3, we consider that the OT operator 1 informs network operator 3 to calculate and prepare the respective task embedding and the network configuration 4 for two tasks, a, e.g., bottles, and b, e.g., cans, in step b1. The network operator 3 may perform calculations and may prepare network configurations 4 for the certain scenarios in the step b2. He then informs the OT operator 1 that the planning phase is finished in step b3.

In the operation phase bii, the OT operator 1 submits task a to the network operator 3 in step b4 and requests the task embedding and network configuration 4. Since task a is already known by the network operator 3 from the planning phase, in step b6, the network operator 3 sends the configuration files to the network management system module 6, for embedding task a and configuring the network accordingly.

Thereafter, at b7, network management system module 6 asks network controller module 8 to configure the network accordingly. Then, network controller module 8 configures the network devices, e.g., bridges, workstations, and responds a success message to network management system module 6 at step b8. At step b9, network controller module 8 notifies network management system module 6 that the network is successfully configured. This confirmation passes from network management system module 6 to network operator 3 in step b10. Finally, in step b11, the network operator 3 tells the OT operator 1 that task a is successfully served. The mentioned case is when the incoming task is known by the network operator 3; however, issues arise when the incoming task is new and the respective network configuration 4 and embedding decisions are unknown to the network operator 3. At some point in step b12, the OT operator 1 submits a new task x to network operator 3. The task must be served by the production line promptly. Since task x is unknown to the network operator 3 as the network operator 3 only prepared solutions/configurations for task a and task b, he must process task x by performing the task embedding, as well as the network configuration 4 manually in step b13. However, the first possible issue is that due to the system complexity, the network operator 3 needs a long time for doing the task embedding and preparing the network configuration 4 files. Moreover, the second issue can be that the solution is resource-inefficient, e.g., the current embedding blocks future tasks, and even causes some QoS violations, such as excessive delay or overloaded bandwidth. In any case, after preparing the configuration files, through steps b14 to b16, the network is configured accordingly. Here the third issue can be raised. The network operator 3 might even have prepared a buggy configuration. Such configuration can get rejected by the network devices, or even cause failures in them. Even if the configuration is successfully done, it can happen that the configuration does not work as intended, since it is manually made by a human and not fully tested. This issue can cause production line outages, high maintenance costs, and a loss of profit by rejecting the task x in step b19.

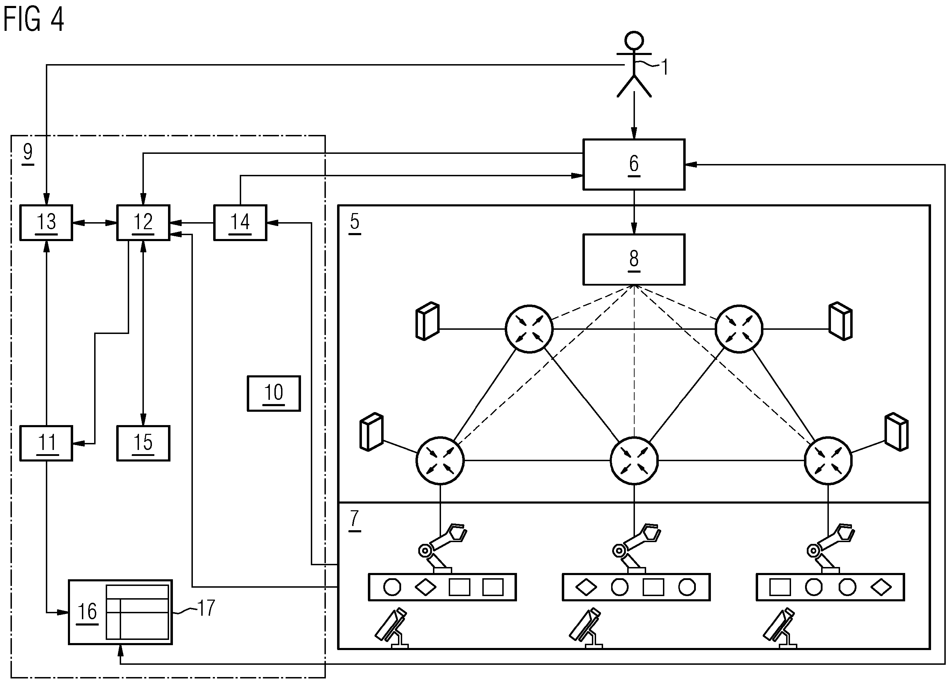

FIG 4 shows a schematic illustration of a system comprising a programmable network 5.

The idea behind the system is to realize task-aware network management and control of a programmable network 5. To achieve this goal, this system may comprise modules and interfaces that work together to let the network "learn" about the production task, and even learn to optimize the programmable network 5 further, e.g., to speed up the production task. An operator of the plant provides only a task intent and not a network intent. The system may learn the needed network settings like network programs, configurations, and control rules.

The system may enable the programmable network 5 to become task aware. This may be established in two ways.

First, the OT operator 1 may provide a task intent as an input. Second, in the infrastructure, the task may be recognized via additional sensors, e.g., video cameras that may for example detect a bottle. This detection may then be fed into an overall task-to-network-operation-synthesis module 9. The task-to-network-operation-synthesis module 9 may use digital representations like digital twins of both the programmable network 5 and the production system to find valid network programs, configurations, and control rules.

The idea is to use real-time production data from a real task and/or an industrial module, e.g., from a video camera taking pictures of customer goods, e.g., bottles. This real-time production data may be fed into a task-translator module 14 of the task-to-network operation synthesis module that may classify the image, e.g., a bottle. Then, the bottle may be taken as an input into an artificial intelligence module 11 of the task-to-network operation synthesis module, which may create the network program, network configuration 4, and network control. A feedback for the artificial intelligence module 11 may be provided from a digital twin module 12 of the task-to-network operation synthesis module. The digital twin module 12 may operate a digital twin representing a real system comprising manufacturing assets and variants of the programmable network 5. The components of the digital network twin may be optimized via the artificial intelligence module 11 as well as an optimization module. As a result, the modules of the task-to-network operation synthesis module may feed task-to-network-intent-mappings into a task-to-network-setting-database. The network setting may comprise the network program code of the programmable network 5 elements, network configurations 4, and network rules. That means there may always be a network setting available that is needed for the network to support the production process, e.g., the production of a bottle.

Components existing prior to this system:
A network management module may be responsible for configuration of the network controller module 8. It may provide an overall network operation intent to the network controller module 8. This may include a network program code for programmable network 5 elements, the needed network configurations 4 for the network elements, and a rules logic.

The network controller module 8 may provide programmable network 5 elements of the programmable network 5 with a respective network program and a respective configuration. In addition, the network controller module 8 runs the logic needed to install the appropriate rules within the programmable network 5 elements.

Major components of the present system may comprise:
The task-to-network-operation-synthesis module 9, which may be a general module responsible for controlling the process between the task-scenario-generator module 13, the digital twin module 12, the artificial intelligence module 11, the task-translator module 14, and the task-embedding-solver module 15. The task-to-network-operation-synthesis module 9 may interface with the OT operator 1, the production and network system, and the network management system.

The task-to-configuration map 17 module 16 may host a task-to-configuration map 17 that may contain the task-to-configuration data. A task may be mapped to a respective network program and/or a respective network configuration 4, and a respective rules setting. The artificial intelligence module 11 is populating the task-to-configuration map 17 with task-to-configuration mappings.

The task-translator module 14 may translate the real-time production data, comprising task data, e.g., pictures of bottles, to machine-readable data or intent requests. The task-translator module 14 may interface with sensors, cameras etc. To fetch the task data, the task-translator module 14 may be realized via an existing machine learning module, e.g., running in a remote cloud system. The task-translator module 14 may provide an interface to the network management module to provide task-related data. The task-translator module 14 may provide tasks as input to the digital twin module 12. It may update corresponding digital network twins of the digital twin module 12 with the new task information.

The artificial intelligence module 11 may receive information about the digital network twins given tasks like a network status, tasks, configurations, etc. It learns the task-to-network-configuration data, which may then be stored in the task-to-configuration map 17. The artificial intelligence module 11 may be needed to efficiently learn and compress such task-to-configuration mapping.

The digital twin module 12 may contain the digital twins either simulating potential future production scenarios or the digital twins rendering the real system comprising a production system and the programmable network 5. The digital twin module 12 may receive scenarios for simulation from the task-scenario-generator module 13. It may run potential scenarios and may provide performance data as a feedback to the artificial intelligence module 11 and the task-embedding-solver module 15. To solve an initial task, which may also not known by the artificial intelligence module 11, the digital twin module 12 may ask the task-embedding-solver module 15 for a solution for a given scenario. The digital twin module 12 may also contain the digital twins connected to the live production and network system. In case a task is also unknown there, it may ask the task-embedding-solver module 15 for an initial solution. The digital twin may provide all information needed by the artificial intelligence module 11 to learn efficient task-to-configuration mappings.

The task-embedding-solver module 15 may solve task embedding problems, i.e., determining plc server locations, plc-to-io device routings and/or qos-guarantees. In case there is no initial network configuration 4 available in the task-to-configuration map 17, the digital twin module 12 may ask the task-embedding-solver module 15 to solve the task embedding problem.

Whether or not information is available is determined by running the loop through the artificial intelligence and task-scenario-generator module 13 initially. The task-embedding-solver module 15 may implement optimization algorithms and solvers, may find a solution for task embedding problems, and sends the solution or even impossible mappings, i.e., ones which need to be rejected, back to the digital twin module 12. It is worth to mention that solving specific instances of the problem may take very long, however, the approach enables the simultaneous scale out due to its digital twin-based architecture, i.e., multiple digital twins in the digital twin module 12 and multiple task-embedding-solver modules 15 can be run and operated in parallel.

The task-scenario-generator module 13 may take the task from the OT operator 1 as an input, and/or the tasks and settings from the artificial intelligence module 11 as input. It is responsible for generating the task-related scenarios for the digital twin module 12, which optimizes the planning and the operation.

Interfaces introduced by this system may comprise: Network management system module-to-task-to-configuration-interface: the network management system module 6 may fetch task-to-network-configuration-settings via the network management system module 6 to task-to-configuration map 17 interface from the task-to-configuration map module 16. Network management system module 6-to-digital twin-interface: the OT operator 1 may provide recommended tasks as an input via this interface to the task-to-network-operation-synthesis module 9.

Network management system module 6-to-tg-interface: the network management system module 6 may recognize tasks that are coming into the system in the future, e.g., a product to be produced has already been recognized at one early stage in the assembly line by the task-translator module 14. The programmable network 5 may already be prepared by requesting a valid network configuration 4 mapping for the current embedded tasks and the future task.

OT-operator-to-tg-interface: the OT operator 1 may provide synthetic tasks via this interface to the task-scenario-generator module 13.

System-to-task-translator module-interface: the task-translator module 14 may receive the tasks of the factory via this interface. In addition, the monitoring and status information about the production and network system may be fetched via this interface.

System-to-digital twin-interface: the digital twin module 12 may receive current state information and task quality information about the production system and the programmable network 5. A dedicated interface may be provided as the task quality might also be fetched from some external sources, e.g., customer feedback.

Two modes of operation may be intended for the system, comprising a planning and optimization phase and an online task detection and optimization phase.

In the planning and optimization phase, the OT user gives a task. The task is then realized either in a physical setup or in a pure digital twin-based setup in a digital twin operated in the digital twin module 12. In the digital twin setup, all involved components are represented by respective digital twins or by a digital twin representing the system. For instance, assembly lines and customer objects may be represented by digital twins. In addition, the involved network components can either be represented by physical objects or also via digital network twins.

In the first setting, the digital twins of the physical production objects, e.g., robot arms, would be connected to real network components for pre-optimization. In this setting, the task detection and task performance measurement are realized digitally. In the planning phase, the initial task embedding is realized by the task-embedding-solver module 15. The network control and configuration are then optimized in a data-driven manner. I.e., the operation of the physical task leads to network communication. To optimize for future tasks, the digital twin module 12 to artificial intelligence module 11 to task-scenario-generator module 13 loop may synthetically generating scenarios which may be optimized by the artificial intelligence module 11 and/or the task-embedding-solver module 15. The produced data may be taken as input by the artificial intelligence module 11. The artificial intelligence module 11 may then produce network programs, e.g., code to-be-executed on programmable network 5 devices of the programmable network 5, which realizes the networking requirements to put the task into effect. However, by continuously observing the performance of the tasks, e.g., how fast customer products are assembled, the artificial intelligence module 11 and the task-embedding-solver module 15 improves the networking software, which involves programmable switch code, network configurations 4, and network control rules. In this way, the artificial intelligence module 11 learns to map real tasks and objects to programmable network 5 code, configurations, and control rules, which are put into a task-to-configuration map 17 of a task-to- configuration -map module.

In the online task detection and optimization phase, the task-to-network-operation-synthesis module 9 recognizes tasks online and provides this input to the network management system module 6 system. The network management system module 6 system then looks up the best possible task-to-network-setting mapping and provides the input to the network controller module 8 system accordingly. In this way, the network management system module 6 system can already prepare the programmable network 5 for upcoming tasks. In addition, the task-to-network-operation-synthesis module 9 may fetch performance data from the production and network system. It may then optimize the overall system in parallel and learns about new tasks. In case of new tasks, it may trigger the task-embedding-solver module 15 to solve the tasks. Although this might lead to a shorter downtime, this setting may still be faster as when humans are involved in the optimization process.

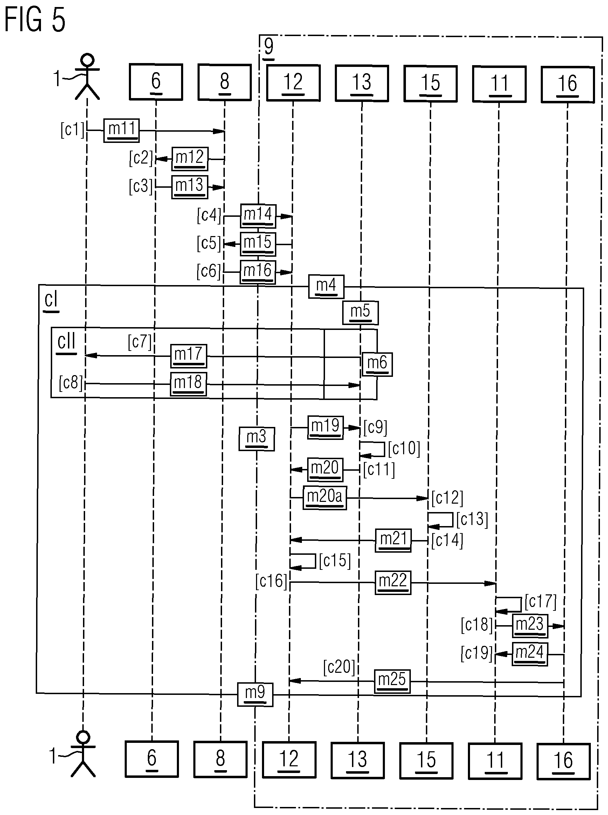

FIG 5 shows a schematic illustration of a data sequence diagram for a method to prepare a programmable network 5.

The method may be conducted by the system, shown in FIG 4.

A step c1 may comprise a reception of a planning phase initialisation request message m11 by a network management system module 6. The planning phase initialisation request message m11 may comprise a request to initiate the planning phase. The planning phase initialisation request message m11 may be send by an OT operator 1.

A step c2 may comprise a transmission of a network discovery request message m12 from the network management system module 6 to a network controller module 8 module of a programmable network 5. The network discovery request message m12 may be send after the reception of the network discovery request message m12 by the network management system module 6. The network discovery request message m12 may comprise a request to provide network discovery data related to the programmable network 5.

A step c3 may comprise a collecting of network discovery data by the network controller module 8 module. The network discovery data may describe the programmable network 5. The collection may be performed by the network controller module 8 module upon receipt of the network discovery request message m12 by the network controller module 8 module. Step c3 may comprise a transmission of a network discovery response message m13 comprising the network discovery data from the network controller module 8 module to the network management system module 6.

A step c4 may comprise a transmission of a network discovery data message m14 from the network management system module 6 to the digital twin module 12. The network discovery data message m14 may comprise the network discovery data.

A step c5 may comprise a transmission of a network discovery data response message m15 from the digital twin module 12 to the network management system module 6. The network discovery data response message m15 may signal the reception of the network discovery data message m14 by the digital twin module 12. The digital twin module 12 may generate a digital twin representing the programmable network 5 according to the network discovery data describing the programmable network 5.

A step c6 may comprise a transmission of a planning procedure initialisation request message m16 from the network management system module 6 to the digital twin module 12. The planning procedure initialisation request message m16 may be send by the network management system module 6 upon reception of the network discovery data response message m15 by the network management system module 6.

The digital twin module 12 of the task-to-network operation synthesis module may receive the planning procedure initialisation request message m16. Upon reception, the task-to-network operation synthesis module may initiate a loop ci comprising training iterations to train a task embedding and network configuration 4 model.

A respective iteration of the loop may comprise steps c7 to c20.

A respective iteration may comprise a phase cii comprising steps c7 and c8. Phase cii may be performed, if the OT operator 1 provides input data comprising a task.

The step c7 may comprise a transmission of a synthetic task-scenario request message m17 from the task-scenario-generator module 13 to the network operator 3 module. The synthetic task-scenario request message m25 m19 m17 may comprise a request to provide a scenario and a task embedding problem to the task-scenario-generator module 13.

The step c8 may comprise a transmission of a synthetic task-scenario response message m18 from the network operator 3 module to the task-scenario-generator module 13, comprising the scenario and the task embedding problem.

The step c9 may comprise a transmission of a task-scenario request message m19 from the digital twin module 12 to the task-scenario-generator. The task-scenario request message m19 may comprise a request to provide the scenario and the task embedding problem to the digital twin module 12.

In a step c10 upon reception of the task-scenario request message m25 m19 by the task-scenario-generator module 13, the task-scenario-generator module 13 may generate the scenario of the programmable network 5 and the task embedding problem to be solved for the scenario and/or may prepare the scenario of the programmable network 5 and the task embedding problem provided by the network operator 3 module.

The step c11 may comprise a transmission of a task-scenario response message m20 from the task-scenario-generator module 13 to the digital twin module 12, comprising the scenario and the task embedding problem. In step c11, the digital network twin module may set up the digital network twin representing the scenario of the programmable network 5.

The step c12 may comprise a transmission of a task embedding solution request message m20 from the digital twin module 12 to a task-embedding-solver module 15 of the task-to-network operation synthesis module. The task embedding solution request message m20 may comprise the scenario of the programmable network 5 and the task embedding problem to be solved for the scenario of the programmable network 5 represented by the digital network twin.

The step c13 may comprise an investigation of a task embedding solution solving the task embedding problem for the scenario of the programmable network 5 by the task-embedding-solver module 15.

The step c14 may comprise a transmission of a task embedding solution response message m21 from the task-embedding-solver module 15 to the digital twin module 12 comprising the task embedding solution.

The step c15 may comprise a simulation of an application of the task embedding solution in the digital network twin representing the scenario of the programmable network 5. The digital twin module 12 may record simulation data of the simulation.

The step c16 may comprise a transmission of a simulation data provision message m22 from the digital twin module 12 to an artificial intelligence module 11 of the task-to-network operation synthesis module. The simulation data provision message m22, m32 comprises the scenario, the task embedding problem and the simulation data.

The step c17 may comprise a training of a task embedding and network configuration 4 model by the artificial intelligence module 11 using the scenario, the task embedding problem and the simulation data.

The step c18 may comprise a transmission of a task-to-configuration map 17 update request message from the artificial intelligence module 11 to a task-to-configuration map 17 module 16 of the task-to-network operation synthesis module.

The step c19 may comprise an update of a task-to-configuration map 17 of the task-to-network operation synthesis module by the task-to-configuration map 17 module 16. The task-to-configuration map 17 maps respective tasks to respective network configurations 4. The step c19 may comprise a transmission of a task-to-configuration map 17 update response message from the task-to-configuration map 17 module 16 to the artificial intelligence module 11.

A step c20 may comprise a transmission of a scenario request message m25 from the artificial intelligence module 11 to the digital twin module 12 upon receipt of the transmission of task-to-configuration map 17 update response message by the artificial intelligence module 11. The scenario request message m25 may request a provision of a further scenario for training.

Step c20 may terminate the respective iteration ci and a new iteration can be initiated.

The iterations ci may be repeated until a fulfilment of a predefined condition.

In this phase, the OT operator 1 may initiate the planning phase by a transmission of the planning phase initialisation request message m11 to an interface of the network management system module 6. Thereafter, in steps c2 to c5, the network management system module 6 may perform the network discovery using the network controller module 8 and may sync the network discovery data with the digital twin module 12 as well.

In step c6, the network management system module 6 may trigger the digital twin module 12 to start the planning procedure. There may be no network configuration 4 for the task available yet. The main idea is to train an artificial intelligence task embedding and network configuration 4 model, such that it can perform the task embedding and network configurations 4 on behalf of the network operator 3. To do so, the digital twin module 12 may need to prepare the data, i.e., tasks/scenarios as input, and task embedding and network configurations 4 as output, and send it to the artificial intelligence module 11 for training the task embedding and network configuration 4 model.

The input may be provided by two possible sources. OT operator 1 and/or the task-scenario-generator module 13. It is not necessary for OT operator 1 to provide any synthetic tasks/scenarios. However, it is possible through steps c7 and c8. In any case, the task-scenario-generator module 13 may be the main responsible module for preparing tasks/scenarios as input.

At steps c9 to c11, the digital twin module 12 may send a request to the task-scenario-generator module 13. The task-scenario-generator module 13 may prepare a new set of tasks/scenarios, and may send it back to the digital twin module 12. to solve the task embedding problem, i.e., determining plc server location, plc-to-io device routing, QoS-guarantees, the digital twin module 12 may ask the task-embedding-solver module 15 to do so in step c12.

The task-embedding-solver module 15 may implement optimization algorithms and solvers, finds a solution for this problem, and sends it back to the digital twin module 12 in steps c13 to c14. It is worth to mention that solving specific instances of the problem can be very long, however, since it is the planning phase, the time budget is virtually unlimited. Thereafter in steps c15 to c16, the digital twin module 12 may simulate the programmable network 5 with the current tasks and scenarios. Then, the digital twin module 12 may collect data regarding the simulated network, such as the embedding, network configurations 4, label it and sends it to the artificial intelligence module 11. The artificial intelligence module 11 may take the data and may train the task embedding and network configuration 4 model in step c17.

In steps c18 to c19, the artificial intelligence module 11 may update the task-to-configuration map 17 which may map different tasks into network configurations 4.

Finally, in step c20, the artificial intelligence module 11 may inform the digital twin module 12 that the training and updating the task-to-configuration map 17 is finished, thus a new training iteration can start.

The training procedure, i.e., steps c7 to c20 may continuously be running to enrich the artificial intelligence module 11 with more configuration mappings and to make it capable of handling different tasks and situations in an efficient manner.

The training loop may be stopped according to an overall configuration, i.e., maximum number of iterations, or when a predefined confidence is reached.

During the planning phase, the artificial intelligence module 11 task embedding and network configuration model is trained to optimize network configuration 4 for serving tasks. In the operation phase, the system is deployed in a real environment, where tasks arrive in real-time, and the network must be efficiently configured to serve them in a timely manner.

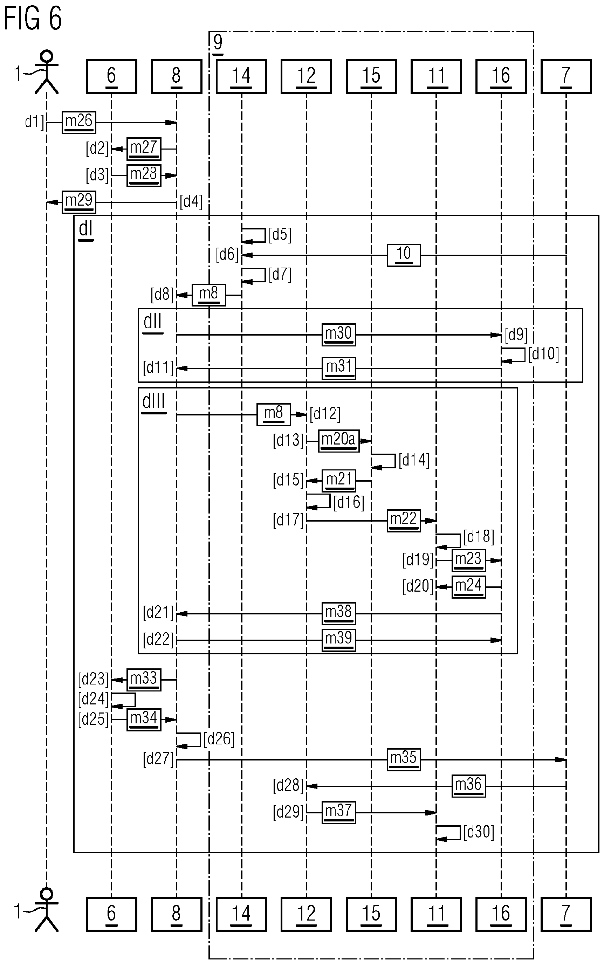

FIG 6 shows a schematic illustration of a data sequence diagram for a method to operate a programmable network 5.

8. Method to operate a programmable network 5, comprising steps of:
A step d1 may comprise a transmission of an operation phase start request message m26 from an OT operator 1 to a network management system module 6.

A step d2 may comprise a transmission of an operation phase request message m27 from the network management system module 6 to a network controller module 8.

A step d3 may comprise a transmission of an operation phase response message m28 from the network controller module 8 to the network management system module 6.

A step d4 may comprise a transmission of an operation phase start response message m29 from the network management system module 6 to the OT operator 1.

The operation phase may now be active. The operation phase may comprise a loop comprising operation procedures di, which may comprise steps d5 to d30.

In a step d5, a task-translator module 14 may activate the reception of real-time production data and start waiting for real-time production data.

In a step d6 the task-translator module 14 may receive real time production data 10 from a production module.

In a step d7 the task-translator module 14 may identify a task embedding problem to be solved in the real time production data 10.

A step d8 may comprise a transmission of a task message from the task-translator module 14 to the network management system module 6. The task message may comprise the task embedding problem.

A sub method dii may be performed, if a respective network configuration 4 is mapped to the task in a task-to-configuration map 17 of a task-to-configuration map 17 module 16. The sub method dii may comprise steps d9 to d11.

A step d9 may comprise a transmission of a task-to-configuration request message m30 from the network management system module 6 to the task-to-configuration map 17 module 16, the task-to-configuration request message m30 may comprising the task embedding problem.

A step d10 may comprise a looking up of a network configuration 4 for the task embedding problem in the task-to-configuration map 17 by the task-to-configuration map 17 module 16.

A step d11 may comprise a transmission of a task-to-configuration response message m31 from the task-to-configuration map 17 module 16 to the network management system module 6, the task-to-configuration response message m31 may comprise the network configuration 4 for the task embedding problem.

A sub method diii may be performed, if the respective network configuration 4 is not mapped to the task in the task-to-configuration map 17 of the task-to-configuration map 17 module 16. The sub method diii may comprise steps d12 to d22.

A step d12 may comprise a transmission of the task embedding problem from the network management system module 6 to the digital twin module 12.

A step d13 may comprise a transmission of a task embedding solution request message m20 from the digital twin module 12 to a task-embedding-solver module 15 of the task-to-network operation synthesis module, the task embedding solution request message m20 comprising the task embedding problem.

A step d14 may comprise an investigating of a task embedding solution solving the task embedding problem for the scenario of the programmable network 5 by the task-embedding-solver module 15.

A step d15 may comprise a transmission of a task embedding solution response from the task-embedding-solver module 15 to the digital twin module 12 comprising the task embedding solution.

A step d16 may comprise a simulation of an application of the task embedding solution in the digital network twin representing the scenario of the programmable network 5 and a recording of simulation data by the digital twin module 12.

A step d17 may comprise a transmission of a simulation data provision message m22 from the digital twin module 12 to an artificial intelligence module 11 of the task-to-network operation synthesis module, the simulation data provision message m22, m32 comprising the scenario, the task embedding problem and the simulation data.

A step d18 may comprise a training of a task embedding and network configuration 4 model by the artificial intelligence module 11 using the scenario, the task embedding problem and the simulation data.

A step d19 may comprise a transmission of task-to-configuration map update request message m23 from the artificial intelligence module 11 to a task-to-configuration map 17 module 16 of the task-to-network operation synthesis module.

A step d20 may comprise an updating of the task-to-configuration map 17 of the task-to-network operation synthesis module by the task-to-configuration map 17 module 16. The task-to-configuration map 17 may map respective tasks to respective network configurations 4. The step may comprise a transmission of a task-to-configuration map 17 update response message from the task-to-configuration map 17 module 16 to the artificial intelligence module 11.

A step d21 may comprise a transmission of the network configuration 4 for the task embedding problem from the task-to-configuration map 17 of the task-to-network operation synthesis module to the network management system module 6.

A step d22 may comprise a transmission of a network configuration 4 response message from the network management system module 6 to the task-to-configuration map 17 module 16.

A step d23 may comprise a transmission of a configure network request message m33 comprising the network configuration 4 for the task embedding problem from the network management system module 6 to the network controller module 8.

A step d24 may comprise a configuration of the programmable network 5 according to the network configuration 4 by the network controller module 8.

A step d25 may comprise a transmission of a network configure response message from the network controller module 8 to the network management system module 6 upon configuration of the programmable network 5.

In a step d26 the network management system module 6 may update an interface module of the network management system module 6 upon reception of the configure network response message by the network management system module 6.

Upon reception of the configure network response message by the network management system module 6, the network management system module 6 may transmit a task quality request message m34 from the network management system module 6 to the production device 7 in a step d27.

A step d28 may comprise a transmission of a task quality response message m35 from the production device 7 to the digital twin module 12.

A step d29 may comprise a transmission of a task quality feedback message m36 from the digital twin module 12 to the artificial intelligence module 11.

A step d30 may comprise an update of the task embedding and network configuration 4 model by the artificial intelligence module 11.

FIG 6 shows a schematic illustration of a sequence diagram of an online operation phase.

It may start with the OT operator 1 commanding the network management system module 6, and the network management system module 6 communicating with the network controller module 8 to initialize the operation phase through steps d1 to d4.

Then, the production loop begins. The production loop may comprise four main parts:
1. waiting for the task to arrive,
2. receiving and translating the incoming tasks into machine-readable data,
3. finding the task embedding and network configuration 4, and 4. configuring the network accordingly.

At the beginning of the loop, the task-translator module 14 may wait for new data from the production device 7 about the newly arrived task, which may come through video streams or sensors. The data may be received by the task-translator module 14 from the production system in step d6. The task-translator module 14 may translate the data into a machine-readable format, such as network intent in the form of source, destination, QoS requirements, etc. And may inform the network management system module 6 about these tasks in step d8.

Having the tasks in hand, the task embedding, and network configuration 4 must be determined and performed. With the artificial intelligence module 11 already filling up the task-to-configuration map 17 of the task-to-configuration map 17 module 16, it may be simple for network management system module 6 to query the task-to-configuration module and request a suitable network configuration 4 for the given task in steps d9 to d11. However, as a backup calculation method, it is still possible to do the exact solution calculation using the task-embedding-solver module 15. The network management system module 6 forwards the tasks to digital twin module 12 in step d12. The digital twin module 12 asks the task-embedding-solver module 15 for the task embedding solution. The task-embedding-solver module 15 may calculate it, and may return it to the digital twin module 12 in steps d13 to d15. The digital twin module 12 then processes the solution and simulates the scenario in step d16, prepares and forwards the necessary data to the artificial intelligence module 11 in step d17. Then, the artificial intelligence module 11 updates the ask embedding and network configuration 4 model and updates the task-to-configuration map 17 with the newly calculated configuration in steps d18 to d20. The calculated network configuration 4 may be provided to the network management system module 6 as the solution for the newly arrived tasks.

By step d23, the network management system module 6 may possess the network configuration 4. At steps d23 to d25, the network management system module 6 may deliver the network configuration 4 to the network controller module 8 and may request the network controller module 8 to configure the programmable network 5 accordingly. After the programmable network 5 is configured for the new task, the network controller module 8 may notify network management system module 6. Then, in step d26, the network management system module 6 may update the interface module so that the OT operator 1 is informed that the tasks are successfully embedded.

To further improve the task embedding and network configuration 4 model during runtime, there may be a task quality feedback coming from production to the digital twin module 12 and the artificial intelligence module 11 in steps d27 to d29. In addition to this real-time information from the production, the task embedding and network configuration 4 model training, like in the planning phase, may be continuously running in the background using synthetic tasks from the task-scenario-generator module 13. Thus, the task-to-configuration map 17 may be updated at runtime for continuously improving network configurations 4.

The approach has the advantage that a human does not need to construct complex network programs, configurations, and control rules. All three come from an artificial intelligence. Integrating optimization modules with artificial intelligence to output best possible network and production system settings, configurations, programs, control rules. For optimization, the task performance, e.g., the number of customer products produced per time period, is taken as an input, not pure networking metrics. This may improves the production time and resource usage. Continuous optimization of the network layout based on real object output of the factory. No static configuration overhead. No static control overhead. No static network program overhead. Automating the task of network reconfiguration. Improved task performance, e.g., higher product throughput, faster task completion time, as network is optimized according to task. Shorter network interrupts due to continuous network reconfigurations. Due to its software-based and digital twin-based approach, the system can scale up according to demands.

Programmable networks 5 become task-aware by integrating interfaces to fetch real-task data. Combining real-task-data input with network operation in industrial networks. Combining digital twin-based input data with network operation in industrial networks. Humans are not providing a network intent anymore. Humans just provide real tasks and/or object data for the system in the planning phase. The human operator can define high-level tasks as optimization goals, instead of network optimization goals. The network is continuously optimized according to the production task. The system recognizes new tasks in the operation phase. No human might be needed to describe the tasks due to using digital twins. Pre- and reconfiguring networks before new tasks arrive in the system.

## Claims

1. Method to prepare a programmable network (5),
Comprising steps of:
- reception of a planning procedure initialisation request message (m16) by a digital twin module (12) of a task-to-network operation synthesis module, the digital twin module (12) configured to operate a digital network twin representing the programmable network (5);
- transmission of a task embedding solution request message (m20) from the digital twin module (12) to a task-embedding-solver module (15) of the task-to-network operation synthesis module, the task embedding solution request message (m20) comprising a scenario of the programmable network (5) and a task embedding problem to be solved for the scenario of the programmable network (5) represented by the digital network twin;
- investigating a task embedding solution solving the task embedding problem for the scenario of the programmable network (5) by the task-embedding-solver module (15);
- transmission of a task embedding solution response message (m21) from the task-embedding-solver module (15) to the digital twin module (12) comprising the task embedding solution;
- simulating an application of the task embedding solution in the digital network twin representing the scenario of the programmable network (5) and recording simulation data by the digital twin module (12);
- transmission of a simulation data provision message (m22, m32) from the digital twin module (12) to an artificial intelligence module (11) of the task-to-network operation synthesis module, the simulation data provision message (m22, m32) comprising the scenario, the task embedding problem and the simulation data;
- training of a task embedding and network configuration (4) model by the artificial intelligence module (11) using the scenario, the task embedding problem and the simulation data;
- transmission of task-to-configuration map (17) update request message from the artificial intelligence module (11) to a task-to-configuration map (17) module (16) of the task-to-network operation synthesis module;
- updating a task-to-configuration map (17) of the task-to-network operation synthesis module by the artificial intelligence module (11), the task-to-configuration map (17) mapping respective tasks to respective network configurations (4);
and
- transmission of a task-to-configuration map (17) update response message from the task-to-configuration map (17) module (16) to the artificial intelligence module (11).

2. Method according to claim 1 comprising steps of:
- upon reception of the planning procedure initialisation request message (m16) by the digital twin module (12), transmission of a task-scenario request message (m25) (m19) from the digital twin module (12) to a task-scenario-generator module (13) of the task-to-network operation synthesis module;
- transmission of a task-scenario response message (m20) from the task-scenario-generator module (13) to the digital twin module (12), comprising the scenario and the task embedding problem; and
- setting up the digital network twin representing the scenario of the programmable network (5) by the digital twin module (12).

3. Method according to claim 2 comprising steps of
- upon reception of the task-scenario response message (m20) by the task-scenario-generator module (13), generating the scenario of the programmable network (5) and the task embedding problem to be solved for the scenario by the task-scenario-generator module (13).

4. Method according to claim 3 comprising steps of
- upon reception of the task-scenario response message (m20) by the task-scenario-generator module (13), transmission of a synthetic task-scenario request message (m25) (m19) (m17) from the task-scenario-generator module (13) to a network operator (3) module;
- transmission of a synthetic task-scenario response message (m20) (m18) from the network operator (3) module to the task-scenario-generator module (13), comprising the scenario and the task embedding problem.

5. Method according to any one of the preceding claims comprising steps of:
- receiving a planning phase initialisation request message (m11) by a network management system module (6),
- transmission of a network discovery request message (m12) from the network management system module (6) to a network controller module (8) of a programmable network (5);
- collecting network discovery data by the network controller module (8), the network discovery data describing the programmable network (5);
- transmission of a network discovery response message (m13) comprising the network discovery data from the network controller module (8) to the network management system module (6) ;
- transmission of a network discovery data message (m14) from the network management system module (6) to the digital twin module (12); and
- generating the digital twin representing the programmable network (5) according to the network discovery data describing the programmable network (5) by the digital twin module (12) .

6. Method according to any one of the preceding claims comprising steps of:
- upon receipt of the transmission of task-to-configuration map (17) update response message by the artificial intelligence module (11), transmission of a scenario request message (m25) from the artificial intelligence module (11) to the digital twin module (12).

7. Method according to any one of the preceding claims comprising steps of:
- repeating the steps of the planning procedure until a fulfilment of a predefined condition.

8. Method to operate a programmable network (5), comprising steps of:
- receiving real time production data (10) from a production module by the digital twin module (12), by a task-translator module (14) of the task-to-network operation synthesis module;
- identifying a task embedding problem to be solved in the real time production data (10) by the task-translator module (14) ;
- transmission of a task message from the task-translator module (14) to an network management system module (6), the task message comprising the task embedding problem;
- transmission of the task embedding problem from the network management system module (6) to the task-to-network operation synthesis module;
- transmission of a network configuration (4) for the task embedding problem from the task-to-network operation synthesis module to the network management system module (6);
- transmission of a configure network request message (m33) comprising the network configuration (4) from the network management system module (6) to the network controller module (8) ;
- configuring the programmable network (5) according to the network configuration (4) by the network controller module (8) ;
- upon configuration of the network transmission of a configure network response message from the network controller module (8) to the network management system module (6).

9. Method according to claim 8 comprising steps of:
- transmission of a task-to-configuration request message (m30) from the network management system module (6) to a task-to-configuration module, the task-to-configuration request message (m30) comprising the incoming task;
- looking up of a network configuration (4) for the incoming task by the task-to-configuration module;
- transmission of a task-to-configuration response message (m31) from the task-to-configuration to the network management system module (6), the task-to-configuration response message (m31) comprising the network configuration (4) for the incoming task.

10. Method according to claim 8 or 9 comprising steps of:
- transmission of the incoming task message from the network management system module (6) to a digital twin module (12);
- transmission of a task embedding solution request message (m20) from the digital twin module (12) to a task-embedding-solver module (15) of the task-to-network operation synthesis module, the task embedding solution request message (m20) comprising a scenario of the programmable network (5) and a task embedding problem to be solved for the scenario of the programmable network (5) represented by the digital network twin;
- investigating a task embedding solution solving the task embedding problem for the scenario of the programmable network (5) by the task-embedding-solver module (15);
- transmission of a task embedding solution response message (m21) from the task-embedding-solver module (15) to the digital twin module (12) comprising the task embedding solution;
- simulating an application of the task embedding solution in the digital network twin representing the scenario of the programmable network (5) and recording simulation data by the digital twin module (12);
- transmission of a simulation data provision message (m22, m32) from the digital twin module (12) to an artificial intelligence module (11) of the task-to-network operation synthesis module, the simulation data provision message (m22, m32) comprising the scenario, the task embedding problem and the simulation data;
- training of a task embedding and network configuration (4) model by the artificial intelligence module (11) using the scenario, the task embedding problem and the simulation data;
- transmission of task-to-configuration map (17) update request message from the artificial intelligence module (11) to a task-to-configuration map (17) module (16) of the task-to-network operation synthesis module;
- updating a task-to-configuration map (17) of the task-to-network operation synthesis module by the artificial intelligence module (11), the task-to-configuration map (17) mapping respective tasks to respective network configurations (4); and
- transmission of task-to-configuration map (17) update response message from the task-to-configuration map (17) module (16) to the artificial intelligence module (11);
- transmission of the network configuration (4) for the task embedding problem from the task-to-configuration map (17) of the task-to-network operation synthesis module to the network management system module (6);
- transmission of the network configuration (4) response message from the network management system module (6) to the task-to-configuration map (17);

11. Method according to one of the claims 8 to 10 comprising steps of:
- upon reception of the configure network response message by the network management system module (6), updating an interface module of the network management system module (6) by the network management system module (6).

12. Method according to one of the claims 8 to 11 comprising steps of:
- upon reception of the configure network response message by the network management system module (6), transmission of a task quality request message (m34) from the network management system module (6) to the production device (7);
- transmission of a task quality response message (m35) from the production device (7) to a digital twin module (12);
- transmission of a task quality feedback message (m36) from the digital twin module (12) to an artificial intelligence module (11);
- updating the task embedding and network configuration (4) model by the artificial intelligence module (11).

13. Method according to one of the claims 8 to 12 comprising steps of:
Transmission of an operation phase start request message (m26) from an OT operator (1) to a network management system module (6);
Transmission of an operation phase request message (m27) from the network management system module (6) to a network controller module (8);
Transmission of an operation phase response message (m28) from the network controller module (8) to the network management system module (6)
Transmission of an operation phase start response message (m29) from the network management system module (6) to the OT operator (1);

14. System comprising a task-to-network operation synthesis module, a network controller module (8), a network management system module (6) and a production device (7), configured to perform a method according to one of the preceding claims.

15. A Task-to-network operation synthesis module of a system according to claim 14.
